# EUROPÄISCHE PATENTANMELDUNG

(11) **EP 2 754 520 A1**
(43) Veröffentlichungstag der Anmeldung: **16.07.2014**
(21) Anmeldenummer: 14000062.1
(22) Anmeldetag: 09.01.2014
(51) Int. Cl.: B23D 47/02, B23D 45/02

(54) **Zugsäge zur Anbringung eines Gehrungsschnitts**

(30) Priorität: 11.01.2013 DE 102013000339
(71) Anmelder: Bader, Manfred, 88353 Kißlegg-Immenried (DE)
(72) Erfinder: Bader, Manfred, 88353 Kißlegg-Immenried (DE)
(74) Vertreter: Riebling, Peter

(57) **Zusammenfassung**

Zugsäge zur Anbringung eines Gehrungsschnitts in plattenförmigen Materialien bestehend aus einem Grundgestell (1) mit einem Auflagetisch (2), über dem eine, an einem Längsholm (11) längsverschiebbar geführte Sägeeinheit (22) angeordnet ist, und der Längsholm (11) an beiden Enden mit jeweils einem Querholm (13) verbunden ist, der jeweils neigungseinstellbar am Auflagetisch (2) gehalten ist, wobei die Sägeeinheit (22) an einem in sich geschlossenen, lastübertragenden Schwenkrahmen (10) angeordnet ist.

## Beschreibung

Die Erfindung betrifft eine Zugsäge mit Gehrungsschnitt nach dem Oberbegriff des Patentanspruches 1.

Derartige Zugsägen werden zur Anbringung von Gehrungsschnitten in beliebigen plattenförmigen Materialien verwendet, wie zum Beispiel Holzplatten, Holzfaserplatten, Steinplatten oder andere plattenförmigen Materialien. Unter dem Begriff "Gehrungsschnitt" wird verstanden, dass von einem Sägeblatt ein bezüglich eines Auflagetisches schräg liegender Sägeschnitt in das plattenförmige Material eingebracht wird.

Bei der Anbringung von Gehrungsschnitten in sehr langen und dicken Materialien, wie zum Beispiel in 20 cm hohen Holzfaserplatten, die bis zu 3 m lang sein können, besteht das Problem, dass der Gehrungsschnitt nur ungenau über die gesamte Länge eingebracht werden kann, weil sich die Zugsäge während des Gehrungsschnittes verkantet.

Um dieses Problem in den Griff zu bekommen, ist eine Steintrennmaschine der Fa. Karl Dahm bekannt, die bei Sägeblattdurchmessern im Bereich von 250 mm bis 350 mm Schnitttiefen zwischen 55 mm und 110 mm bereitstellt. Die maximalen Schnittlängen liegen im Bereich zwischen 600 mm bis 1500 mm.

Die Halterung der Zugsäge ist als Schwenkhalterung ausgebildet. Sie besteht aus einer oberen, horizontal verlaufenden Führungsschiene, die jeweils an ihren beiden Enden an zugeordneten vertikalen Führungsarmen befestigt ist. Die vertikalen Führungsarme sind in einer horizontalen Schwenkachse schwenkbar und feststellbar an der Seite des Auflagetisches gehalten. Es handelt sich demnach um eine beidseitig des Auflagetisches angeordnete, einarmige Schwenkhalterung, die sich nur oberhalb des Auflagetisches erstreckt.

Es handelt sich um einen in Richtung zum Auflagetisch geöffneten Halbrahmen, der bei geringer Verwindungssteifigkeit nur geringe Verkantungs- und Zugkräfte übertragen kann.

Überdies besteht der weitere Nachteil, dass eine solche Schwenkanordnung sowohl an der einen als auch an der anderen Seite getrennt eingestellt werden muss, weil sowohl an der einen als auch an der anderen Seite jeweils eine Klemmschraube mit einer zugeordneten Schwenkskala angeordnet ist.

Damit ist ein großer Arbeitsaufwand verbunden, weil der in Winkelgraden eingestellte Schwenkwinkel auf der einen Seite unter optischer Kontrolle genau gleich eingestellt werden muss, wie der Schwenkwinkel auf der anderen Seite. Zur Veränderung des Schwenkwinkels einer solchen Halterung muss jeweils an der linken und rechten Seite diese Schwenkhalterung getrennt eingestellt werden. Die Wiederholgenauigkeit einer solchen Einstellungsart ist problematisch.

Eine solche Schwenkhalterung ist demnach nicht zur Anbringung von tiefen Gehrungsschnitten, wie zum Beispiel mit einer (Tiefe) Länge von 300 mm geeignet, weil bedingt durch den langen Gehrungsschnitt eine Verwindung der Schwenkhalterung während der Anbringung des Gehrungsschnittes in Kauf genommen werden muss. Dadurch ist es schwierig, den Gehrungsschnitten mit dem in einer anderen, anschließenden Platte angebrachten Gehrungsschnitt fluchtend zur Deckung zu bringen.

Der Erfindung liegt deshalb die Aufgabe zugrunde, eine Zugsäge zur Anbringung von Gehrungsschnitten in beliebigen plattenförmigen Materialien so weiterzubilden, dass mit wesentlich höherer Genauigkeit und einfacherer Einstellung präzise Gehrungsschnitte angebracht werden können.

Zur Lösung der gestellten Aufgabe ist die Erfindung durch die technische Lehre des Anspruches 1 gekennzeichnet.

Wesentliches Merkmal der Erfindung ist, dass die Schwenkhalterung erfindungsgemäß aus einem durchgehenden, etwa rechteckförmigen Schwenkrahmen besteht, der lastübertragend in sich geschlossen ist.

Mit der gegebenen technischen Lehre ergibt sich der Vorteil, dass die nach dem Stand der Technik bekannte, einseitige, aus einem Halbrahmen bestehende Schwenkhalterung nun durch einen durchgehenden, in sich geschlossenen, holmartigen und an allen vier Seiten lastübertragenden Schwenkrahmen ersetzt ist, der sich mit seinem oberen Längsholm parallel und oberhalb zur Auflagefläche des Auflagetisches erstreckt, und der sich mit zwei seitlichen Querholmen unterhalb des Auflagetisches hinaus erstreckt, die unterhalb des Auflagetisches durch einen weiteren Längsholm verbunden sind.

Dadurch ergibt sich ein durchgehender rechteckförmiger Schwenkrahmen, der sich mit seinem oberen Längsholm oberhalb des Auflagetisches und mit seinen unteren Längsholmen unterhalb des Auflagetisches befindet. Die seitlichen Querholme bilden somit bezüglich ihrer am Auflagetisch ansetzenden Schwenklager jeweils einen zweiarmigen Hebel. Erfindungsgemäß ist vorgesehen, dass die Einstelleinrichtung zur Einstellung des Schwenkwinkels (Gehrungswinkels) am unteren Längsholm des Schwenkrahmens angreift. Damit greift die Einstelleinrichtung am freien Hebelende der als zweiarmigen Hebel ausgebildeten Querholme (genauer gesagt: am unteren Längsholm) an. Eine kurze Einstellbewegung der Einstelleinrichtung wird über den zweiarmigen Hebel in eine größere Schwenkbewegung der Zugsäge übersetzt. Eine Anbringung der Schwenkeinrichtung am Querholm ist ebenfalls denkbar.

Durch die Verwendung eines durchgehenden, in sich geschlossenen Schwenkrahmens ergibt sich nun erstmals eine ausgezeichnete Stabilität und Verwindungssteifigkeit eines in sich geschlossenen Schwenkrahmens, weil das beträchtliche Gewicht der Zugsäge, im Bereich von ca. 40 bis 70 kg, durchbiegungssteif an dem oberen Längsholm und einer daran angeordneten Führungsschiene aufgenommen wird. Säge- oder Reaktionskräfte werden während des Sägeschnittes vom oberen Längsholm über die Querholme auf den unteren Längsholm übertragen, sodass sich damit eine verwindungssteife Konstruktion des Schwenkrahmens ergibt.

In einer bevorzugten Ausgestaltung des Schwenkrahmens wird dieser aus geschlossenen Stahl-Hohlprofilen gebildet, die jeweils stirnseitig über Eck miteinander verschweißt sind, sodass sich eine verwindungssteife Konstruktion ergibt.

Hierauf ist die Erfindung jedoch nicht beschränkt. Statt der Verwendung von Stahl-Hohlprofilen können zum Beispiel auch Aluminium-Hohlprofile verwendet werden, die als geschlossene oder halb offene Profile ausgebildet sind. Ferner können die Hohlprofile eckenseitig nicht nur verschweißt sein, sondern sie können stirnseitig auch ineinander gesteckt, vernietet, verklebt oder in anderer Weise miteinander verbunden sein.

Vorstehend wurde ausgeführt, dass der Grundriss des Schwenkrahmens in sich rechteckförmig ausgebildet ist. Hierauf ist die Erfindung nicht beschränkt. Statt der rechteckförmigen Ausbildung ist es in einer anderen Ausgestaltung möglich, die Eckenseiten abgeschrägt oder abgerundet zu gestalten. Ebenso ist es möglich, die Längsholme nicht zwangsläufig vertikal auszubilden, sondern die Längsholme können zum Beispiel auch als winklig zueinander verlaufende Profile ausgebildet sein.

Wichtig ist die durchgehende, lastübertragende Ausbildung des Schwenkrahmens, der aus miteinander verbundenen, in sich geschlossenen Profilen besteht, wodurch sich eine besonders verwindungssteife Konstruktion ergibt. Hierbei ist wesentlich, dass das Schwenklager des Schwenkrahmens auf der Höhe des Sägeschlitzes des Auflagetisches liegt, um zu gewährleisten, dass die sich im Sägeschlitz bewegende Säge den geforderten Gehrungsschnitt ausführt.

Durch die Verwendung eines in sich geschlossenen Schwenkrahmens ist es nun auf einfachere Weise möglich, den Schwenkrahmen mit einer einzigen, von einer Seite zu bedienenden Verstelleinrichtung in seiner Schwenkneigung einzustellen und festzustellen. Eine optische Kontrolle und beidseitiger Abgleich der beidseitigen Schwenkeinstellungen ist nicht mehr notwendig, wäre jedoch möglich.

Aufgrund der gegebenen Torsionssteifigkeit des Schwenkrahmens kann die Einstelleinrichtung lediglich an einer Seite der Maschine (zum Beispiel der Bedienungsseite) angeordnet sein und lediglich an einer einzigen Ecke des Schwenkrahmens angreifen, wodurch die Verstellkräfte, die von der Einstelleinrichtung auf den Schwenkrahmen ausgeübt werden, durch die Torsionssteifigkeit der Konstruktion des Schwenkrahmens auch auf die gegenüberliegende Seite übertragen werden, ohne dass sich der Schwenkrahmen dabei verwindet oder verkantet.

In einer bevorzugten Ausgestaltung der Erfindung besteht die Einstelleinrichtung aus einer handbetätigten Spindel, die mit einem Handrad betätigt wird, wobei die Spindelmutter bevorzugt am unteren Längsholm des Schwenkrahmens angeordnet ist, um eine besonders günstige Einleitung der Einstellkraft auf den Schwenkrahmen zu ermöglichen.

Die auf kleinem Einstellweg eingestellte Spindelverschiebung wird über den zweiarmigen Hebel der Querholme in eine größere Schwenkbewegung der Zugsäge übertragen.

Über die Spindelmutter der Einstelleinrichtung werden auch Reaktionskräfte auf den Auflagetisch übertragen, wobei der Schwenkrahmen noch zusätzlich mindestens an einer Seite mit einer Klemmplatte verbunden ist, in der ein Führungsschlitz eingearbeitet ist, in welchen eine Klemmschraube eingreift, die mit dem Grundgestell verbunden ist.

Erfindungsgemäß reicht es demnach aus, die Klemmplatte lediglich an einer Seite anzubringen, weil es wegen der verwindungssteifen Ausführung des Schwenkrahmens nicht mehr notwendig ist - wie beim Stand der Technik -, den Schwenkrahmen und die Klemmeinrichtung an beiden Seiten anzubringen.

Selbstverständlich liegt es im Rahmen der Erfindung, eine solche Klemmeinrichtung auch an beiden Seiten des Schwenkrahmens anzubringen, obwohl die Erfindung hierauf nicht angewiesen ist.

Vorstehend wurde der Begriff "Zugsäge" verwendet. Dies bedeutet, dass am oberen Längsholm des Schwenkrahmens eine Sägeeinrichtung angeordnet ist, die im Wesentlichen aus einem Elektromotor oder allgemein einem Antriebsmotor besteht, der über eine Energiekette mit Energie versorgt wird, und der Antriebsmotor ist auf den Führungsschienen zusammen mit der daran angeflanschten Säge und der Sägeblattabdeckung verschiebbar ausgebildet. Die Verschiebung erfolgt hierbei per Hand durch Angreifen an einem Betätigungsgriff, sodass die Säge per Hand in der Art einer Zugsäge entlang dem Längsholm des Schwenkrahmens verschoben werden kann.

Die Erfindung ist nicht auf die handbetätigte Verschiebung einer Zugsäge beschränkt. Es kann in einer anderen Ausgestaltung auch vorgesehen sein, dass die Verschiebung der Zugsäge entlang des Längsholmes elektromotorisch, hydraulisch oder elektro-mechanisch gesteuert ist.

Die Erfindung ist auch nicht auf die Anordnung eines Sägeblattes zum Sägen von Holzmaterial beschränkt. Statt eines solchen Sägeblattes können auch Trennscheiben zum Sägen von Stein oder anderen Materialien verwendet werden. Der Begriff "Sägeblatt" ist deshalb nicht einschränkend zu verstehen. Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: perspektivische Ansicht einer Zugsäge nach der Erfindung von vorne
Figur 2: die gleiche Darstellung wie Figur 1 mit Darstellung der Zugsäge von hinten
Figur 3: Stirnansicht der Anordnung nach Figuren 1 und 2 mit der den Gehrungsschnitt ausführenden Zugsäge

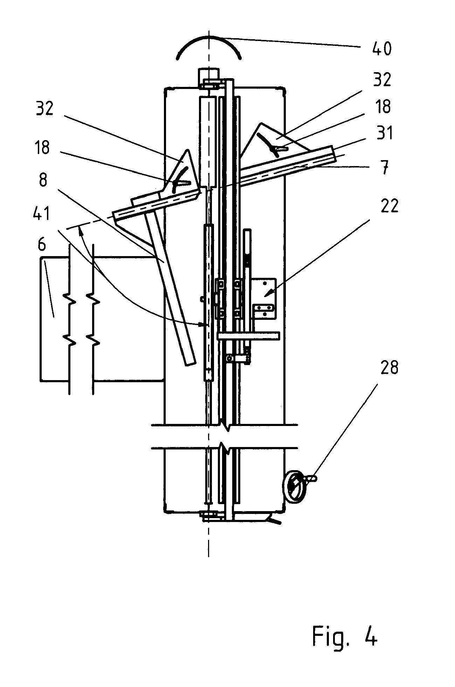

Figur 4: Die Draufsicht auf die Anordnung nach Figur 1 bis 3

Die Zugsäge zur Ausführung eines Gehrungsschnittes in beliebigen plattenförmigen Materialien besteht im Wesentlichen aus einem Grundgestell 1, das einen Auflagetisch 2 aufweist, der mit Stützfüßen 4 gegenüber dem Erdboden abgestützt ist. Seitlich an dem Auflagetisch 2 ist ein Beistelltisch 6 angeflanscht.

In der Oberfläche des Auflagetisches 2 ist ein in Längsrichtung verlaufender Sägeschlitz 3 angeordnet, der den Auflagetisch 2 trennt oder durchgreift, wobei das Sägeblatt 29 der Zugsäge in den Sägeschlitz 3 eingreift.

Seitlich an mindestens einer Seite des Grundgestells 1 ist eine Einstelleinrichtung 5 zur Einstellung der Neigung des erfindungsgemäßen Schwenkrahmens 10 vorgesehen.

Am hinteren Ende des Auflagetisches 2 ist eine Anschlagplatte 7 angeordnet, die das Material in Längsrichtung des Auflagetisches 2 hält.

Der Längenanschlag 8 definiert die einstellbare Länge eines nicht dargestellten Werkstückes.

Die Einstelleinrichtung 5 weist im Übrigen eine Spindel 9 auf, die drehfest mit einem Handrad 28 verbunden ist. Die Spindelmutter 38 ist im Bereich eines Schwenklagers angeordnet, das am unteren Längsholm 12 des Schwenkrahmens 10 befestigt ist. Auf diese Weise kann eine Einstellkraft der Einstelleinrichtung 5 spielfrei auf den Schwenkrahmen 10 übertragen werden und ebenso auch Reaktionskräfte von dem Schwenkrahmen auf die Einstelleinrichtung.

Der Schwenkrahmen 10 besteht aus einem oberen, etwa horizontal und parallel zur Oberfläche des Auflagetisches 2 verlaufenden Längsholm, der über jeweils stirnseitig befestigte und parallel zueinander verlaufende Querholme 13 mit einem unteren, unterhalb des Auflagetisches 2 verlaufenden Längsholm 12 verbunden ist.

Der Schwenkrahmen 10, bestehend aus den Holmen 11, 12, 13, ist ein durchgehender, verwindungssteifer Rahmen, an dessen oberen Seite (am Längsholm 11) die Zugsäge angeordnet ist.

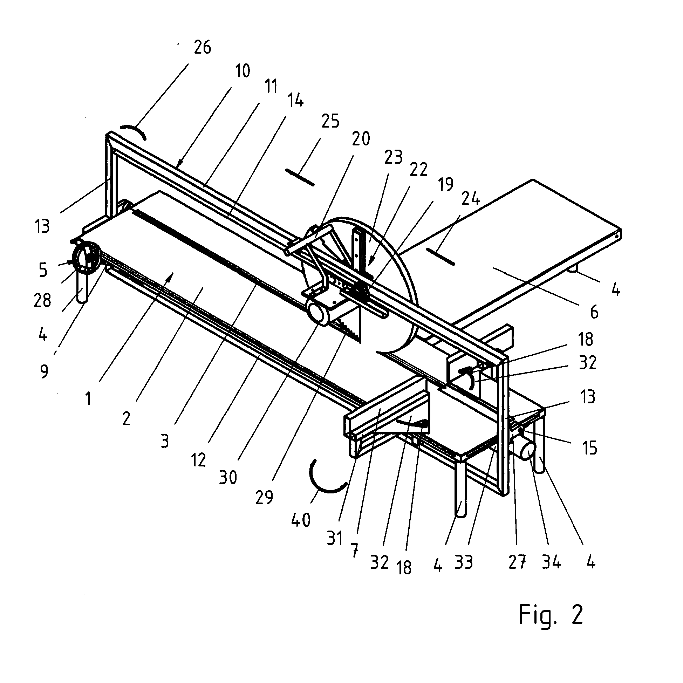

Die Zugsäge besteht im Wesentlichen aus einem Sägemotor 30 (siehe Figur 2), der über eine Energiekette 19 mit Energie versorgt wird. Die gesamte Zugsäge ist in einer mit dem Längsholm verbundenen Führungsschiene 14 in den Pfeilrichtungen 24, 25 verschiebbar am oberen Längsholm 11 des Schwenkrahmens 10 angeordnet.

Durch Angriff per Hand an einem Betätigungsgriff 20 kann somit die gesamte Sägeeinheit 22 entlang der Führungsschiene 14 und dem Längsholm 11 des Schwenkrahmens 10 verschoben werden.

Die Sägeeinheit 22 der Zugsäge besteht außerdem aus einem Sägeblattschutz 23, in dessen Innenraum in an sich bekannter Weise das Sägeblatt 29 angeordnet ist, welches in den Sägeschlitz 3 des Auflagetisches 2 eingreift.

Auf einer Seite des Schwenkrahmens 10 ist eine Klemmplatte 16 angeordnet, in der ein etwa bogenförmiger Führungsschlitz 17 eingearbeitet ist, in dem eine Klemmschraube 18 einstellbar und feststellbar eingreift, die mit dem Grundgestell 1 verbunden ist.

Die Schwenkachse 15 des Schwenkrahmens 10 ist bevorzugt mittig mit dem Sägeblatt 29 ausgebildet, aber -in einer anderen Ausführung - auch auf einer Seite des Sägeblattes 29 mit diesem fluchtend.

Die Schwenkachse 15 liegt im Übrigen bündig mit der Oberkante des Auflagetisches 2.

Der Haltewinkel 21 ist fest mit dem Längsholm 11 verbunden, die Energiekette 19 ist fest mit dem Haltewinkel 21 verbunden.

Erfindungsgemäß ist der gesamte Schwenkrahmen 10 bei Lösen der Klemmschraube 18 im Führungsschlitz 17 in Pfeilrichtung 26 und in Gegenrichtung hierzu verschwenkbar zum Auflagetisch 2 und zu diesem feststellbar.

Hierzu wird das Handrad 28 der Einstelleinrichtung 5 bei gelöster Klemmschraube 18 betätigt.

Die Schwenkachse 15 des Schwenkrahmens 10 ist in einem Schwenklager 27 gehalten, welches fest mit dem Schwenkrahmen 10 verbunden ist.

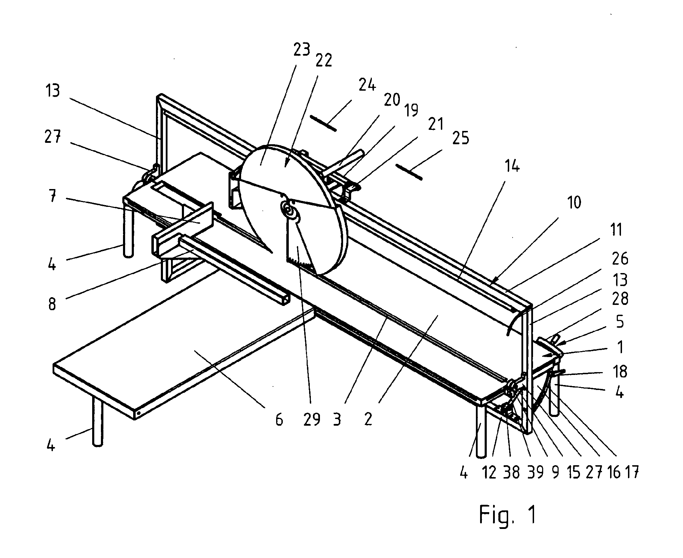

Gemäß Figur 1 liegt dem schwenkrahmenseitigen Schwenklager 27 ein ortsfestes Gegenlager 29 gegenüber, welches mit dem Grundgestell 1 verbunden ist.

In einem Teil der Anschlagplatte 7 ist ein Verstellbügel 31 in Verbindung mit einem Klemmblech 32 inklusive des Längenanschlages 8 in Bezug zur Vertikalen drehbar gestaltet.

Unterhalb des Sägeschlitzes 3 ist eine Absaugwanne 33 zur Aufnahme von durch den Sägeschlitz 3 hindurchfallendem Schnittmaterial vorhanden, wobei die Absaugwanne 33 an mindestens einer Seite luftschlüssig mit einem Absaugstutzen 34 verbunden ist, über den das in der Absaugwanne 33 enthaltene Sägematerial abgesaugt werden kann.

Die Drehachse der Anschlagplatte 7 liegt auf der Höhe des Sägeblattes 29, damit die Skala der Anschlagplatte 7, über welche der Abstand des Längenanschlags 8 eingestellt wird, dem Sägeblatt 29 zugeordnet werden kann.

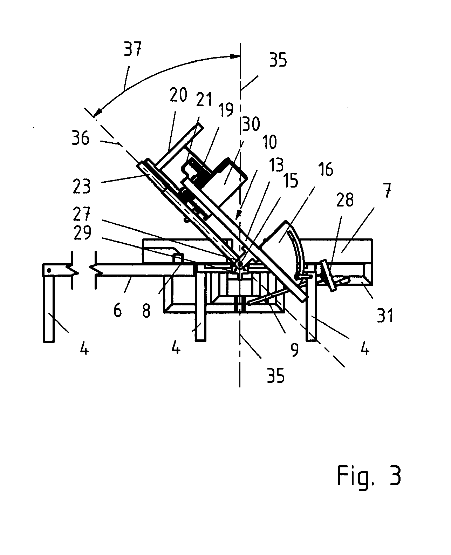

Die Figur 3 zeigt die Anbringung eines Gehrungsschnittes, bei dem der Schwenkrahmen 10 in Pfeilrichtung 26 um einen Schwenkwinkel 37 in Bezug zur Vertikalen 35 verschwenkt ist. Die Vertikale 35 schneidet hierbei die Schwenkachse 15 des Schwenkrahmens 10. Die Sägeachse 36 bildet somit einen Schwenkwinkel 37 zur Vertikalen 35.

Die Anschlagplatte 7 gemäß Figur 2 ist in Pfeilrichtung 40 einstellbar und feststellbar.

### Zeichnungslegende

- 1: Grundgestell
- 2: Auflagetisch
- 3: Sägeschlitz
- 4: Stützfuß
- 5: Einstelleinrichtung
- 6: Beistelltisch
- 7: Anschlagplatte
- 8: Längenanschlag
- 9: Spindel
- 10: Schwenkrahmen
- 11: Längsholm
- 12: Längsholm
- 13: Querholm
- 14: Führungsschiene
- 15: Schwenkachse (zu 27)
- 16: Klemmplatte
- 17: Führungsschlitz
- 18: Klemmschraube
- 19: Energiekette
- 20: Betätigungsgriff
- 21: Haltewinkel
- 22: Sägeeinheit
- 23: Sägeblattschutz
- 24: Pfeilrichtung
- 25: Pfeilrichtung
- 26: Pfeilrichtung
- 27: Schwenklager (von 15)
- 28: Handrad
- 29: Sägeblatt
- 30: Sägemotor
- 31: Verstellbügel (von 7)
- 32: Klemmblech
- 33: Absaugwanne
- 34: Absaugstutzen
- 35: Vertikale (durch 15)
- 36: Sägeachse
- 37: Schwenkwinkel
- 38: Spindelmutter
- 39: Gegenlager
- 40: Pfeilrichtung

## Patentansprüche

1. Zugsäge zur Anbringung eines Gehrungsschnitts in plattenförmigen Materialien bestehend aus einem Grundgestell (1) mit einem Auflagetisch (2), über dem eine, an einem Längsholm (11) längsverschiebbar geführte Sägeeinheit (22) angeordnet ist, und der Längsholm (11) an beiden Enden mit jeweils einem Querholm (13) verbunden ist, der jeweils neigungseinstellbar am Auflagetisch (2) gehalten ist, **dadurch gekennzeichnet, dass** die Sägeeinheit (22) an einem in sich geschlossenen, lastübertragenden Schwenkrahmen (10) angeordnet ist.

2. Zugsäge nach Anspruch 1, **dadurch gekennzeichnet, dass** der in sich geschlossene, lastübertragende Schwenkrahmen (10) seitlich aus den beiden als zweiarmige Hebel ausgebildeten Querholmen (13) gebildet ist, deren freie, untere Enden durch einen weiteren Längsholm (12) unter dem Auflagetisch (2) miteinander verbunden ist.

3. Zugsäge nach Anspruch 1 oder 2, **dadurch gekennzeichnet, dass** die Einstelleinrichtung (5) zur Einstellung der Schwenklage des Schwenkrahmens (10) am unteren Ende des Schwenkrahmens (10) angreift.

4. Zugsäge nach einem der Ansprüche 1 bis 3, **dadurch gekennzeichnet, dass** die seitlichen Querholme (13) bezüglich ihrer am Auflagetisch (2) ansetzenden Schwenkachsen (15) jeweils einen zweiarmigen Hebel bilden.

5. Zugsäge nach einem der Ansprüche 1 bis 4, **dadurch gekennzeichnet, dass** der Grundriss des Schwenkrahmens (10) rechteckförmig ausgebildet ist.

6. Zugsäge nach einem der Ansprüche 1 bis 5, **dadurch gekennzeichnet, dass** die Schwenkachse (15) des Schwenkrahmens (10) auf der Höhe des Sägeschlitzes (3) und des Auflagetisches (2) liegt und dass das Sägeblatt (29) durch die Schwenkachse (15) hindurch verläuft.

7. Zugsäge nach einem der Ansprüche 1 bis 6, **dadurch gekennzeichnet, dass** die Einstelleinrichtung (5) aus einer handbetätigten Spindel (9) besteht , deren Spindelmutter (38) am unteren Längsholm (13) des Schwenkrahmens (10) angeordnet ist.

8. Zugsäge nach einem der Ansprüche 1 bis 7, **dadurch gekennzeichnet, dass** die auf kleinem Einstellweg eingestellte Spindelverschiebung der Einstelleinrichtung (5) über den zweiarmigen Hebel der Querholme (13) in eine größere Schwenkbewegung der Sägeeinheit (22) übertragbar ist.

9. Zugsäge nach einem der Ansprüche 1 bis 8, **dadurch gekennzeichnet, dass** der Schwenkrahmen (10) an einer Seite mit einer Klemmplatte (16) verbunden ist, in der ein Führungsschlitz (17) eingearbeitet ist, in welcher eine Klemmschraube (18) eingreift, die mit dem Grundgestell (1) verbunden ist.

10. Zugsäge nach einem der Ansprüche 1 bis 9, **dadurch gekennzeichnet, dass** am oberen Längsholm (11) des Schwenkrahmens (10) eine Führungsschiene (14) zur Längsführung der Sägeeinheit (22) angeordnet ist.
